(19) **Europäisches Patentamt / European Patent Office / Office européen des brevets**

(11) **EP 1 522 456 B1**

(12) **EUROPEAN PATENT SPECIFICATION**

| | |
|---|---|
| (45) Date of publication and mention of the grant of the patent:<br>**26.09.2007 Bulletin 2007/39** | (51) Int Cl.:<br>**B60Q 1/12** (2006.01) |

(21) Application number: **04024096.2**

(22) Date of filing: **08.10.2004**

(54) **Apparatus for automatically adjusting the direction of the light axis of a vehicle headlight**

Vorrichtung zur automatischen Einstellung der Richtung einer optischen Achse eines Autoscheinwerfers

Dispositif pour ajuster automatiquement l'orientation de l'axe optique d'un projecteur de véhicule

(84) Designated Contracting States:
**DE FR GB**

(30) Priority: **10.10.2003 JP 2003352606**

(43) Date of publication of application:
**13.04.2005 Bulletin 2005/15**

(73) Proprietor: **DENSO CORPORATION**
**Kariya-city,**
**Aichi-pref. 448-8661 (JP)**

(72) Inventor: **Nishimura, Kenichi**
**c/o Denso Corporation**
**Kariya-city**
**Aichi-pref., 448-8661 (JP)**

(74) Representative: **Kuhnen & Wacker**
**Patent- und Rechtsanwaltsbüro**
**Prinz-Ludwig-Strasse 40A**
**85354 Freising (DE)**

(56) References cited:
**US-A- 5 588 733      US-A- 5 931 572**
**US-A1- 2003 055 548      US-A1- 2003 067 762**
**US-A1- 2003 114 974**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

1. Field of Invention

The present relates to an apparatus for automatically adjusting a direction of a light axis of a vehicle headlight according to claim 1.

2. Description of Related Art

From US 2003/055548 A a lamp's optical axis control system for a vehicle is known which includes a vehicle speed sensor, a steering angle sensor, a circuit for calculating driver's viewpoint and a controller for controlling the optical axis according to the position of the driver's viewpoint. The controller indicates the position of the driver's viewpoint a certain time in advance according to the vehicle speed signal and the steering angle signal. Therefore, the illumination range of the headlights can timely provide a desirable driver's viewpoint.

From US 2003/067762 A1 a vehicle light apparatus is known which comprises a controller for changing a lighting range of a lamp for illuminating a forward part of a vehicle corresponding to a steering angle of the vehicle and for controlling the lighting range of lighting means corresponding to a steering angular velocity of the vehicle. Alternatively, there is provided lighting range control means for changing a lighting range of lighting means for illuminating a forward part of the vehicle corresponding to a steering angle of the vehicle and for controlling the lighting range of the lighting means based on an operation of a turn signal lamp of the vehicle. It is possible to decide a running condition of the vehicle from the steering angular velocity or the operation state of the turning signal lamp and a vehicle speed, thereby rapidly controlling a change in the lighting direction or the lighting area of the lamp in a running direction. Consequently, it is possible to carry out an illumination in the running direction prior to a steering operation. Thus, it is effective for maintaining the safe running of the vehicle on a curved road and an intersection road.

Automatically adjusting a direction of a light axis of a vehicle headlight is known as disclosed in Japanese Patent Application Laid-Open No. 2002-178829. This document describes a technique for varying the sensitivity or responsiveness of such an apparatus depending on the changing rate of the steering angle of the steering wheel in adjusting horizontally a direction of a light axis of a vehicle headlight in accordance with the steering angle, such that the direction of the light axis of the vehicle headlight well follow the movement of the steering wheel while the vehicle is turning.

However, the apparatus disclosed in this document has a problem in that the light axis of the vehicle headlight may be swayed to the right and left unnecessary if the steering wheel is moved beyond a certain dead zone of the steering wheel even when the vehicle is in a straight-running state, which causes the driver of the vehicle to feel awkwardness in the control of the beam patterns.

SUMMARY OF THE INVENVTION

It is an object of the present invention to provide an apparatus for automatically adjusting the direction of a light axis of a vehicle headlight with which the disturbances in the swivel control due to the road irregularities can be effectively reduced.

According to the present invention this object is solved by the features of claim 1.

Improved embodiments of the inventive apparatus result from the subclaims.

With the inventive configuration it becomes possible to reduce disturbances in the swivel control due to road irregularities in particular such as wheel ruts when the vehicle is running straight, and to reduce the control delay when the vehicle is turning.

The swivel control unit may have a first filtering unit generating a filtered steering angle by subjecting the steering angle detected by the steering angle sensor to a first filtering process when the steering angle is within a straight running range around a neutral angular position of the steering wheel and to a second filtering process whose filtering strength is weaker than a filtering strength of the first filtering process when the steering angle is within one of turning ranges which interpose therebetween the straight running range.

The straight running range may be a range extending from +10 degrees through the neutral angular position (0 degrees) to -10 degrees, so that it can be determined easily whether the vehicle is running straight or is turning, even when the steering wheel is moved slightly by the driver's steering operations or by the behavior of the tires when the vehicle is running on the road with irregularities such as wheel ruts.

The filtering strength of the first filtering process may be twice (or four times) or more that of the second filtering process to suppress unnecessary movements of the light axis of the headlight.

The first filtering unit may subject the steering angle to a third filtering process having a filtering strength which is equal to, or is 70%, or less of that of the filtering process of the second filtering process upon detecting that the steering wheel is being moved back or moved farther away at a rate faster than a predetermined value, so that the light axis of the vehicle headlight well follows the movements of the steering wheel while the vehicle is turning.

The first filtering unit may weaken continuously or in stages the filtering strength of the second filtering process when the steering angle is changed into one of the turning ranges from the straight running range, so that it becomes possible to avoid any awkward sensations for the driver in the control of beam patterns.

The swivel control unit may have a swivel angle calculating unit calculating a primary swivel angle depending on the filtered steering angle generated by the first filtering unit, a second filtering unit generating a target swivel angle by filtering the primary swivel angle, and an actuator adjusting the direction of the light axis of said vehicle headlight in accordance with the target swivel angle, the second filtering unit varying a filtering strength thereof depending on the difference between the primary swivel angle and the actual swivel angle corresponding to the direction of the light axis

The second filtering unit may subject the primary swivel angle to a weak filtering when the difference between the primary swivel angle and the actual swivel angle is larger than a predetermined value, and to a strong filtering when the difference is equal to or smaller than the predetermined value, so that fluctuation of the light axis of the vehicle headlight can be suppressed while the vehicle is turning.

Preferably, the filtering strength of the second filtering unit when the steering wheel is being moved back is weaker than when the steering wheel is being moved farther away.

BRIEF DESCRIPTION OF THE DRAWINGS

In the accompanying drawings:

Fig. 1 is a schematic view showing an overall structure of an apparatus for automatically adjusting a direction of a light axis of a vehicle headlight according to an embodiment of the invention;
Fig. 2 is an explanatory view for explaining beam patterns of the headlights adjusted by the apparatus according to the embodiment of the invention;
Fig. 3 is a signal flow diagram of the apparatus according to the embodiment of the invention;
Fig. 4 is a flowchart for explaining the swivel control routine performed by a CPU within an ECU included in the apparatus according to the embodiment of the invention;
Fig. 5 is a time diagram showing progressions over time of the steering angle and the filtered steering angle generated in the steering angle filtering process shown in Fig. 3;
Fig. 6 is a flowchart for explaining the target swivel angle filtering process shown in Fig. 3; and
Fig. 7 and Fig. 8 are time diagrams each showing progressions over time of the primary swivel angle generated in the primary steering angle calculation process shown in Fig. 3 and the actual swivel angle.

PREDERRED EMBODIMENTS OF THE INVENTION

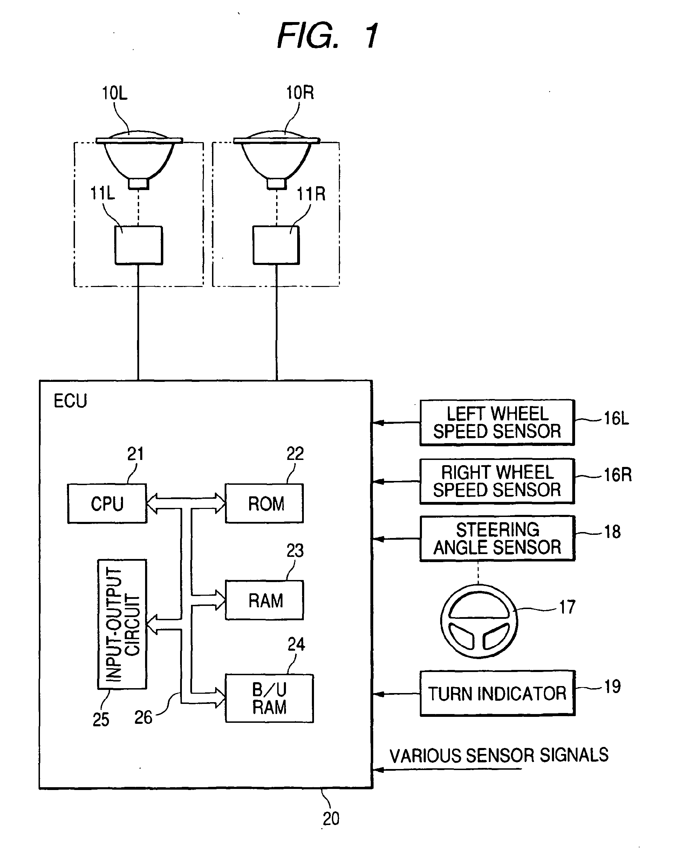

Fig. 1 shows an overall structure of an apparatus for automatically adjusting a direction of a light axis of a vehicle headlight according to an embodiment of the invention.

In this drawing, 10L and 10R denote left and right vehicle headlights, respectively. The headlights 10L and 10R are linked to actuators 11L and 11R for adjusting the light axes of the headlights 10L and 10R in the horizontal direction. An ECU (Electronic Control Unit) 20 includes a CPU 21 for executing various processings, a ROM 22 for storing control programs, control maps, etc., a RAM 23 for temporarily storing various data, a B/U (Back Up) RAM 24, an input-output circuit 25, and a bus line 26 for connecting these elements.

The ECU 20 receives an output signal from a left wheel speed sensor 16L detecting a left wheel speed VL, an output signal from a right wheel speed sensor 16R detecting a right wheel speed VR, an output signal from a steering angle sensor 18 detecting a steering angle θ of a steering wheel 17, and various sensor signals from other sensors, not illustrated. The actuators 11L and 11R act to adjust horizontally the directions of the light axes of the headlights 10L and 10R in accordance with signals outputted from the ECU 20.

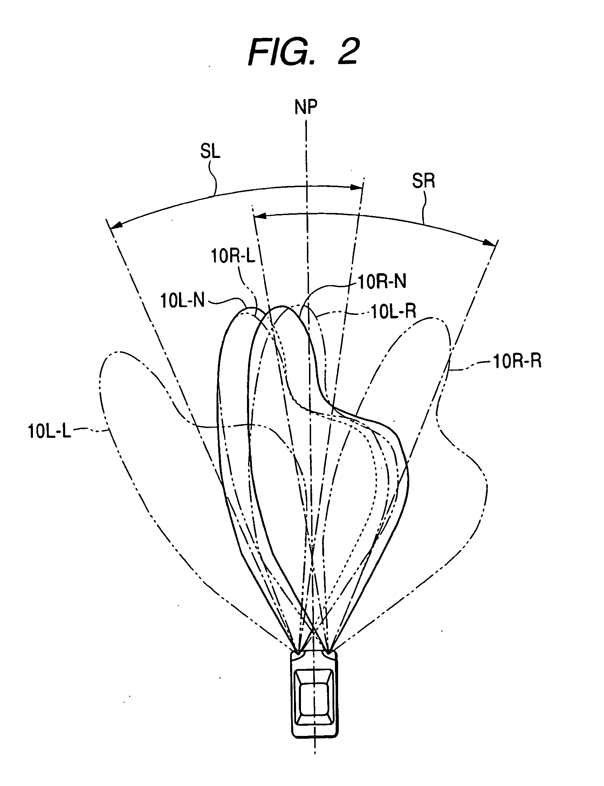

Fig. 2 shows beam patterns of the headlight 10R and 10L (low beam). In this figure, the heavy solid line 10L-N represents a beam pattern of the headlight 10L when the steering wheel is in its neutral angular position. The arched arrow SL represents a swivel range within which the light axis of the headlight 10L can be swiveled in accordance with the steering angle of the steering wheel. The chain double-dashed lines 10L-R and 10L-L represent beam patterns of the headlight 10L when the light axis of the headlight 10L is in the rightmost position and the leftmost position within the swivel range, respectively. The heavy solid line 10R-N represents a beam pattern of the headlight 10R when the steering wheel is in the neutral angular position. The arched arrow SR represents a swivel range within which the light axis of the headlight 10R can be swiveled in accordance with the steering angle of the steering wheel. The chain double-dashed lines 10R-R and 10R-L represent beam patterns of the headlight 10R when the light axis of the headlight 10R is in the rightmost position and the leftmost position within the swivel range, respectively.

The swivel ranges SL and SR should provide the driver with good visibility in the leftward or rightward direction when the driver turns the steering wheel to the left or right without a sacrifice of visibility in the forward direction. Accordingly, as shown in Fig. 2, a portion of the swivel range SR at the right of the initial angular position is wider than that of the swivel range SL so that the variation of the light axis of the headlight 10R is larger than that of the headlight 10L when the driver turns the steering wheel to the right. On the other hand, a portion of the swivel range SL at the left of the initial angular position is wider than that of the swivel range SR so that the variation of the light axis of the headlight 10L is larger than that of the headlight 10R when the driver turns the steering wheel to the left.

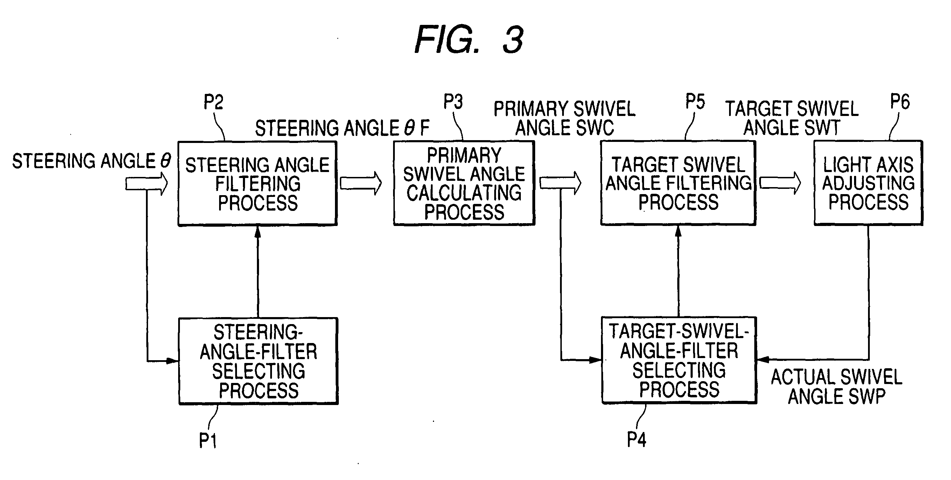

Fig. 3 is a signal flow diagram of the apparatus according to this embodiment. As shown in this figure, the steering angle θ detected by the steering angle sensor 18 is subjected to a steering angle filtering process P2 to generate a filtered steering angle θF by use of a filter F (not illustrated) which a steering-angle-filter selecting process P1 selects on the basis of the steering angle θ inputted thereto.

The filtered steering angle θF is subjected to a primary swivel angle calculating process P3 to generate a primary swivel angle SWC. The primary swivel angle SWC is subjected to a target swivel angle filtering process P5 to generate a target swivel angle SWT by use of a filter FSW which a target-swivel-angle-filter selecting process P4 selects on the basis of the primary swivel angle SWC and an actual swivel angle SWP hereinafter described.
The target swivel angle SWT is supplied to a light axis adjusting process P6 to cause the actuator 11L or 11R to adjust the light axis of the headlights 10L or 10R.

As explained above, the actual direction of the light axis of the headlights 10L or 10R, that is, the actual swivel angle SWP affects the filter selection in the target-swivel-angle-filter selecting process P4.

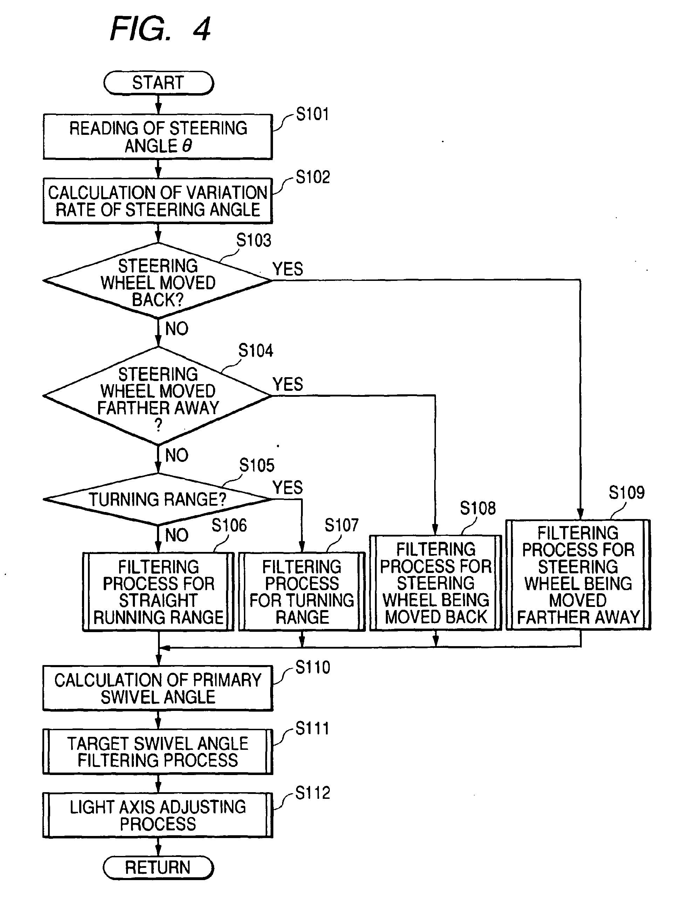

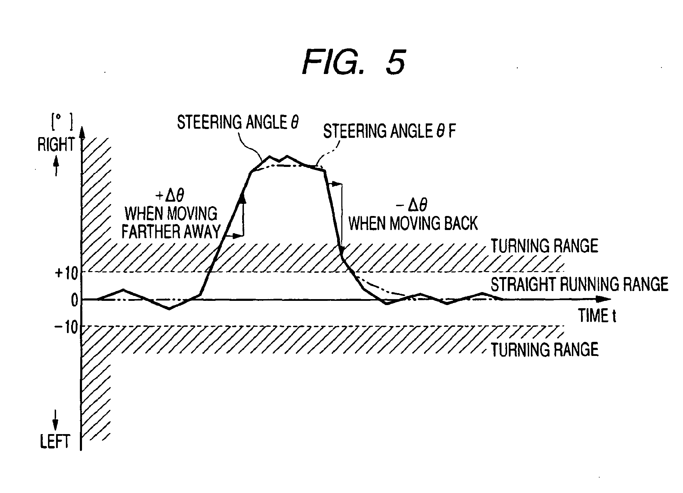

Next, the swivel control routine which the CPU 21 within the ECU 20 performs is explained below with reference to the flowchart shown in Fig. 4, and the time chart shown in Fig. 5 that represents progressions of the steering angle θ and the filtered steering angle θF over time. The CPU 21 performs this swivel control routine at regular intervals.

As shown in Fig. 4, the steering angle θ detected by the steering sensor 18 is read at step S101. Subsequently, the variation of the steering angle per unit time Δθ is calculated on the basis of the present steering angle θp and the previous steering angle θo. Next, it is determined at step S103 whether or not the steering wheel 17 is being moved back at a rate faster than a predetermined value. More specifically, it is determined whether or not the steering angle variation Δθ is negative and an absolute value thereof is larger than a predetermined value. If it is determined at step S103 that the steering wheel 17 is not being moved back at a rate faster than the predetermined value, then the process goes to step S104 to determine whether or not the steering wheel 17 is being moved farther away at a rate faster than a predetermined value. More specifically, it is determined whether or not the steering angle variation Δθ is positive and its value is larger than a predetermined value.

If it is determined at step S104 that the steering wheel 17 is not being moved farther away at a rate faster than the predetermined value, then the process goes to step S105 to determine whether or not the steering angle θ read at step S105 is within any one of turning ranges each of which is more than +10 or -10 degrees distant from the neutral angular position (0 degrees).

If it is determined at step S105 that the steering angle θ is not within the turning ranges, then the process goes to step S106 to generate the filtered steering angle θF by subjecting the steering angle θ to a strong filtering process using a strong filter, assuming that the steering angle is within a straight running range around the neutral angular position. On the other hand, if it is determined at step S105 that the steering angle θ is within one of the turning ranges, then the process goes to step S107 to generate the filtered steering angle θF by subjecting the steering angle θ to a weak filtering process using a weak filter.

If it is determined at step S104 that the steering wheel 17 is being moved farther away at a rate faster than the predetermined value (+Δθ in Fig. 5), then the process goes to step S108 where the steering angle θ is subjected to a weak filtering process using a weak filter whose filtering strength may be the same as, or 70% or less of that of the weak filter used at step 107 in order to generate the filtered steering angle θF. On the other hand, if it is determined at step S103 that the steering wheel 17 is being moved back at a rate faster than the predetermined value (-Δθ in Fig. 5), then the process goes to step S109 where the steering angle θ is subjected to a weak filtering process using a weak filter whose filtering strength may be the same as, or 70% or less of that of the weak filter used at step 107 in order to generate the filtered steering angle θF. When the filtering strengths of the filters used at steps S106, 107, 108 and 109 are represented as F-straight, F-turn, F-farther, and F-back, respectively, they are preferably in a relationship of F-straight > F-turn > F-farther > F-back. However, they may be the same.

After the filtering process is executed at any one of steps S106 to S109, the process goes to step S110 to calculate the primary swivel angles SWC on the basis of the filtered steering angle θF. Subsequently, a target swivel angle filtering process hereinafter described is executed at step S111. After that, the process goes to step S112 to cause the actuators 11L or 11R to adjust the light axis of the headlight 10L or 10R on the basis of the target swivel angle SWT generated at step S111 to complete the swivel control routine.

As explained above, the actual swivel angle SWP or the direction of the light axis of the headlight 10L or 10R after being adjusted by the actuator 11L or 11R at step S112 affects the target swivel angle filtering process performed next time at step S111. The above-described steps S102 to S109 correspond to the steering-angle-filter selecting process P1 and the steering angle filtering process P2 shown in Fig. 3.

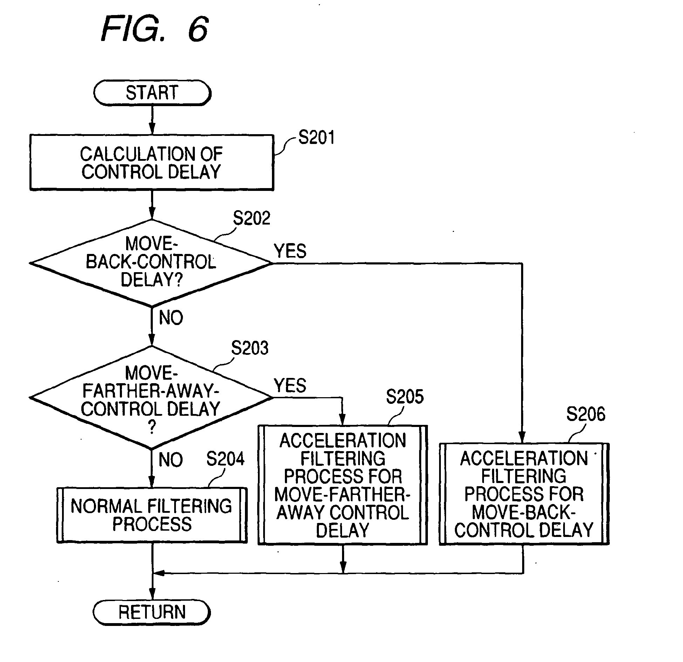

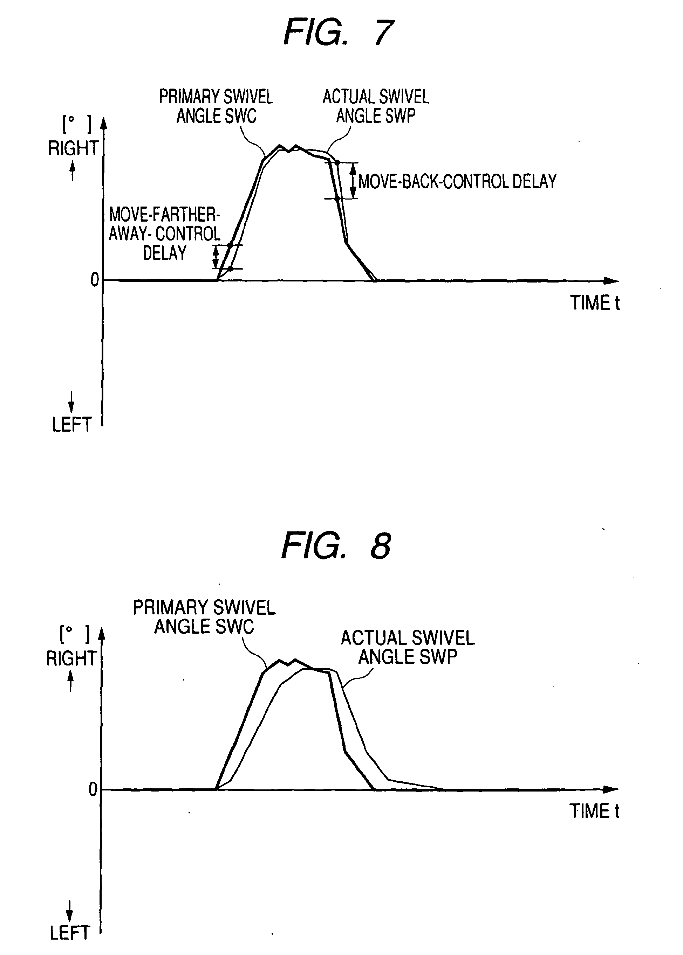

Next, the target-swivel-angle-filter selecting process P4 and the target angle filtering process P5 corresponding to the above-described step S111 are explained with reference to the flowchart shown in Fig. 6 and the time charts shown in Figs. 7 and 8 each of which represents progressions of the primary swivel angle SWC (indicated by a heavy solid line in these figures) and the actual swivel angle Swp (indicated by a thin solid line in these figures) over time. Fig. 7 shows a case where the control delays when the steering wheel is being moved back and when the steering wheel is being moved farther away are considered in the target-swivel-angle-filter selecting process P4 and the target angle filtering process P5. Fig. 8 shows a case where the control delays when the steering wheel is being moved back and when the steering wheel is being moved farther away are not considered in the target-swivel-angle-filter selecting process P4 and the target angle filtering process P5.

As shown in Fig. 6, the difference between the primary swivel angle SWC and the actual swivel angle SWT, to be more precise, the value obtained by subtracting the value of the actual swivel angle SWP from the value of the primary swivel angle SWC is determined as the control delay (= SWC - SWP) at step S201. Next, it is determined at step S202 whether or not the condition that calculated control delay is negative and the absolute value thereof is larger than a predetermined value is satisfied. If it is determined that the above condition is not satisfied, that is, if it is determined at step S202 that there exists no significant control delay when the steering wheel is being moved back (referred to as "move-back-control delay" hereinafter), then it is determined whether or not the condition that calculated control delay is positive and the value thereof is larger than a predetermined value is satisfied. If it is determined that the above condition is not satisfied, that is, if it is determined at step S203 that there exists no move-back-control delay nor any significant control delay when the steering wheel is being moved farther away (referred to as "move-farther-away-control delay" hereinafter), then the process goes to step S204 to perform the normal filtering process to complete the target-swivel-angle-filter selecting process P4 and the target angle filtering process P5.

On the other hand, if it is determined that the above condition is satisfied, that is, if it is determined at step S203 that there exists any move-farther-away-control delay, then the process goes to step S205 where an acceleration filtering process for reducing the move-farther-away-control delay is performed to complete the target-swivel-angle-filter selecting process P4 and the target swivel angle filtering process P5. The filtering strength of the filter used in this acceleration filtering process for dealing with the move-farther-away-control delay is weak, or it may be zero. In consequence, it becomes possible for the actual swivel angle SWP to follow well the primary swivel angle SWC when the steering wheel is being moved farther away as apparent by comparing Fig. 7 with Fig. 8.

If it is determined at step S202 that the above condition is satisfied, that is, if it is determined that there exists any move-back-control delay, then the process goes to step S206 where an acceleration filtering process for reducing the move-back-control delay is performed to complete the target-swivel-angle-filter selecting process P4 and the target swivel angle filtering process P5. The filtering strength of the filter used in this acceleration filtering process for dealing with the move-back-control delay is weak, or it may be zero. In consequence, it becomes possible for the actual swivel angle SWP to follow well the primary swivel angle SWC when the steering wheel is being moved back as apparent by comparing Fig. 7 with Fig. 8. When the filtering strengths of the filters used at steps S204, S205, and S206 are represented as F-204, F-S205, and FS206, respectively, they are preferably in a relationship of F-S204 > F-S205 > F-S206. However, they may be the same.

As described above, the apparatus for automatically adjusting a direction of a light axis of a vehicle headlight according to the embodiment of the invention includes:

a steering angle sensor (18) detecting a steering angle θ of a steering wheel (17) of a vehicle;
a swivel control unit (20, 11L, 11R) performing a swivel control by which the directions of the light axes of the vehicle headlights are adjusted to target directions in accordance with the steering angle θ detected by the steering angle sensor (18);
wherein the swivel control unit varies sensitivity of the swivel control depending on a value of the steering angle detected by the steering angle sensor.

The swivel control unit has a first filtering unit (P1, P2) subjecting the steering angle θ detected by the steering angle sensor (18) to a first filtering process (S106) when the steering angle is within the straight running range around the neutral angular position of the steering wheel (17) and to a second filtering process (S107) whose filtering strength is weaker than the filtering strength of the first filtering process (S106) when the steering angle θ is within one of turning ranges which interpose therebetween the straight running range.

In this embodiment, the strong filter is selected when the steering angle is within the straight running range within which the vehicle is assumed to be running straight, and the weak filter is selected when the steering angle is within any one of the turning ranges within which the vehicle is assumed to be turning left or right. The filtered steering angle θF is used so that the sensitivity or responsiveness of the swivel control can be changed depending on the movement of the steering wheel. In consequence, it becomes possible to reduce disturbances in the swivel control due to the road irregularities such as wheel ruts when the vehicle is running straight, and to reduce the control delay when the vehicle is turning.

In this embodiment, it is assumed that the vehicle is running straight when the steering angle θ is within the straight running range extending from +10 degrees through the neutral angular position (0 degrees) to -10 degrees. Therefore, it becomes possible to determine precisely whether the vehicle is running straight or it is turning even when the steering wheel is moved slightly by the driver's steering operations or by the behavior of the tires when the vehicle is running on the road with irregularities such as wheel ruts.

The filtering strength of the filter used when the steering angle is within the straight running range is twice or more (preferably, four times or more) that of the filter used when the steering angle is within any one of the turning ranges. In consequence, it becomes possible to suppress unnecessary movements of the light axes of the headlights when the vehicle is running straight, that is, when the steering angle is within the straight running range.

Furthermore, in this embodiment, the first filtering unit (P1, P2) subjects the steering angle θ to a third filtering process (S108) having a filtering strength which is equal to, or is 70%, or less of that of the filtering process of the second filtering process (S107) upon detecting that the steering wheel (17) is being moved farther away at a rate faster than a predetermined value. In consequence, it becomes possible to enhance the responsibility of the swivel control when the vehicle makes a steep turn.

Likewise, the first filtering unit (P1, P2) subjects the steering angle θ to a fourth filtering process (S109) having a filtering strength which is equal to, or is 70%, or less of that of the third filtering process (S108) upon detecting that a steering wheel (17) is being moved back at a rate faster than a predetermined value. Accordingly, when the steering wheel is moved back rapidly; the filtering strength is made even weaker than when the steering angle is moved farther away to make a steep turn.

It is also possible to vary the filtering strength continuously or in stages, when the steering angle θ is changed into the turning range from the straight running range. By varying the filtering strength gradually, it becomes possible to avoid the driver from feeling awkwardness in the control of beam patterns when the steering angle θ is changed into the turning range from the straight running range.

As explained above, the swivel control unit has also a second filtering unit (P4, P5) for filtering the primary swivel angle SWC calculated from the filtered steering angle θF to generate the target swivel angle SWT, the second filtering unit (P4, P5) varying the filtering strength thereof depending on the difference between the primary swivel angle SWC and the actual swivel angle SWT corresponding to the current direction of the light axis of the vehicle headlight.

This second filtering unit (P4, P5) makes it possible to reduce the control delay, so that the directions of the light axes of the headlights can well follow the movements of the steering wheel while the vehicle is turning. The second filtering unit (P4, P5) of the swivel control unit constituted by the ECU 20 and the actuators 11L, 11R is configured to make a difference in the filtering strength between when the steering wheel is being moved farther away and when the steering wheel is being moved back. Preferably, the filtering strength when the steering wheel is being moved back is weaker than when the steering wheel is being moved farther away.

In the above described embodiment, the filter used for the steering angle filtering process P2 or the target swivel angle filtering process P5 may be a filter whose input-output characteristics is represented by the following equation.

$$\mathtt{Fout = c \times Fin + (1-c) \times Fold}$$

where Fout is the output from the filter, c is a filtering factor ($0 \leq c \leq 1$), Fin is the input to the filter, and Fold is the previous output from the filter at the previous filtering process.

In this case, the filtering strength can be defined as $(1-c) \times 100$ (%).

The above explained preferred embodiments are exemplary of the invention of the present application which is described solely by the claims appended below. It should be understood that modifications of the preferred embodiments may be made as would occur to one of skill in the art.

**Claims**

1. A control apparatus for automatically adjusting a direction of a light axis of a vehicle headlight comprising:

a signal reading means (S101 in Fig. 4) reading a steering angle signal derived by a steering angle sensor (18) indicative of a steering angle of a steering wheel of a vehicle; and

a swivel control unit (CPU 21) performing a swivel control to adjust a direction of a light axis of a vehicle headlight (10L, 10R) in accordance with said steering angle signal;

**charaterized in that** said swivel control unit (CPU 21) performs a filtering on said steering angle signal, a strength of said filtering being changed depending on a value of said steering angle signal (P1, P2 in Fig. 3), and performs said swivel control in accordance with said steering angle signal having been filtered.

2. An apparatus for automatically adjusting a direction of a light axis of a vehicle headlight according to claim 1, wherein said swivel control unit (CPU 21) has a first filtering unit (P1, P2) generating a filtered steering angle ($\theta$ F) by subjecting said steering angle detected by said steering angle sensor (18) to a first filtering process when said steering angle ($\theta$) is within a straight running range around a neutral angular position of said steering wheel (17) and to a second filtering process whose filtering strength is weaker than a filtering strength of said first filtering process when said steering angle ($\theta$) is within one of turning ranges which interpose therebetween said straight running range.

3. An apparatus for automatically adjusting a direction of a light axis of a vehicle headlight according to claim 2, wherein said straight running range is a range extending from +10 degrees through said neutral angular position to -10 degrees.

4. An apparatus for automatically adjusting a direction of a light axis of a vehicle headlight according to claim 3, wherein said filtering strength of said first filtering process is twice or more that of said second filtering process.

5. An apparatus for automatically adjusting a direction of a light axis of a vehicle headlight according to claim 3, wherein said filtering strength of said first filtering process is four times or more that of said second filtering process.

6. An apparatus for automatically adjusting a direction of a light axis of a vehicle headlight according to claim 2, wherein said first filtering unit (P1, P2) generates said filtered steering angle ($\theta$ F) by subjecting said steering angle ($\theta$) to a third filtering process having a filtering strength which is equal to or 70% or less of said filtering process of said second filtering process upon detecting that a steering wheel (17) is being moved back at a rate faster than a predetermined value.

7. An apparatus for automatically adjusting a direction of a light axis of a vehicle headlight according to claim 2, wherein said first filtering unit (P1, P2) generates said filtered steering angle ($\theta$ F) by subjecting said steering angle ($\theta$) to a further filtering process having a filtering strength which is equal to or 70% or less of said filtering process of said second filtering process upon detecting that a steering wheel (17) is being moved farther away at a rate faster than a predetermined value.

8. An apparatus for automatically adjusting a direction of a light axis of a vehicle headlight according to claim 2, wherein said first filtering unit (P1, P2) weakens continuously said filtering strength of said second filtering process when said steering angle ($\theta$) is changed into one of said turning ranges from said straight running range.

9. An apparatus for automatically adjusting a direction of a light axis of a vehicle headlight according to claim 2, wherein said first filtering unit (P1, P2) weakens in stages said filtering strength of said second filtering process when said steering angle ($\theta$) is changed into one of said turning ranges from said straight running range.

10. An apparatus for automatically adjusting a direction of a light axis of a vehicle headlight according to claim 2, wherein said swivel control unit (CPU 20, 21) has a swivel angle calculating unit calculating a primary swivel angle depending on said filtered steering angle generated by said first filtering unit (P1, P2), and a second filtering unit (P4, P5) generating a target swivel angle by filtering said primary swivel angle, said second filtering unit (P4, P5) varying a filtering strength thereof depending on difference between said primary swivel angle and an actual swivel angle corresponding to said direction of said light axis of said vehicle headlight (10L, 10R), said swivel control unit (CPU 20, 21) having an actuator (11L, 11R) adjusting said direction of said light axis of said vehicle headlight (10L, 10R) in accordance with said target swivel angle.

11. An apparatus for automatically adjusting a direction of a light axis of a vehicle headlight according to claim 10, wherein said second filtering unit (P4, P5) subjects said primary swivel angle to a weak filtering when difference between said primary swivel angle and said actual swivel angle is larger than a predetermined value, and to a strong filtering when said difference is equal to or smaller than said predetermined value.

**12.** An apparatus for automatically adjusting a direction of a light axis of a vehicle headlight according to claim 11, wherein a filtering strength of said second filtering unit (P4, P5) is different between when said steering wheel (17) is being moved back and when said steering wheel (17) is being moved farther away.

**13.** An apparatus for automatically adjusting a direction of 5 a light axis of a vehicle headlight according to claim 12, wherein said filtering strength of said second filtering unit (P4, P5) when said steering wheel (17) is being moved back is weaker than when said steering wheel (17) is being moved farther away.

**Patentansprüche**

**1.** Steuerungsvorrichtung zum automatischen Einstellen einer Richtung einer Lichtachse eines Fahrzeug-Scheinwerferlichts, die folgende Merkmale aufweist:

eine Signallese-Einrichtung (S101 in Fig. 4), die ein Lenkwinkelsignal liest, das durch einen Lenkwinkelsensor (18) hergeleitet wird, der einen Lenkwinkel eines Lenkrads eines Fahrzeugs anzeigt; und
eine Schwenksteuereinheit (CPU 21), die eine Schwenksteuerung ausführt, um eine Richtung einer Lichtachse eines Fahrzeug-Scheinwerferlichts (10L, 10R) gemäß dem Lenkwinkelsignal einzustellen;
**dadurch gekennzeichnet, dass** die Schwenksteuereinheit (CPU 21) einen Filtervorgang bezüglich des Lenkwinkelsignals ausführt, wobei eine Intensität des Filtervorgangs abhängig von einem Wert des Lenkwinkelsignals (P1, P2 in Fig. 3) geändert wird, und die Schwenksteuerung gemäß dem Lenkwinkelsignal ausführt, das gefiltert worden ist.

**2.** Vorrichtung zum automatischen Einstellen einer Richtung einer Lichtachse eines Fahrzeug-Scheinwerferlichts nach Anspruch 1, wobei die Schwenksteuereinheit (CPU 21) eine erste Filterungseinheit (P1, P2) aufweist, die einen gefilterten Lenkwinkel ($\theta$ F) erzeugt, indem der Lenkwinkel, der durch den Lenkwinkelsensor (18) erfasst wird, einem ersten Filtervorgang unterzogen wird, wenn der Lenkwinkel ($\theta$) sich innerhalb eines geraden Fahrbereichs um eine neutrale Winkelposition des Lenkrads (17) herum befindet, und einem zweiten Filtervorgang, dessen Filterungsintensität schwächer ist als eine Filterungsintensität des ersten Filtervorgangs, wenn der Lenkwinkel ($\theta$) sich innerhalb eines von Wendebereichen befindet, die zwischen dem geraden Fahrbereich plaziert sind.

**3.** Vorrichtung zum automatischen Einstellen einer Richtung einer Lichtachse eines Fahrzeug-Scheinwerferlichts nach Anspruch 2, wobei der gerade Fahrbereich ein Bereich ist, der sich von +10 Grad durch die neutrale Winkelposition bis -10 Grad erstreckt.

**4.** Vorrichtung zum automatischen Einstellen einer Richtung einer Lichtachse eines Fahrzeug-Scheinwerferlichts nach Anspruch 3, wobei die Filterungsintensität des ersten Filtervorgangs zweimal oder mehr so intensiv ist wie die des zweiten Filtervorgangs.

**5.** Vorrichtung zum automatischen Einstellen einer Richtung einer Lichtachse eines Fahrzeug-Scheinwerferlichts nach Anspruch 3, wobei die Filterungsintensität des ersten Filtervorgangs viermal oder mehr so intensiv ist wie die des zweiten Filtervorgangs.

**6.** Vorrichtung zum automatischen Einstellen einer Richtung einer Lichtachse eines Fahrzeug-Scheinwerferlichts nach Anspruch 2, wobei die erste Filterungseinheit (P1, P2) den gefilterten Lenkwinkel ($\theta$F) erzeugt, indem der Lenkwinkel ($\theta$) einem dritten Filtervorgang unterzogen wird, der eine Filterungsintensität aufweist, die kleiner oder gleich oder 70 % des Filtervorgangs des zweiten Filtervorgangs ist, wenn erfasst wird, dass ein Lenkrad (17) mit einer Rate zurück bewegt wird, die schneller als ein vorbestimmter Wert ist.

**7.** Vorrichtung zum automatischen Einstellen einer Richtung einer Lichtachse eines Fahrzeug-Scheinwerferlichts nach Anspruch 2, wobei
die erste Filterungseinheit (P1, P2) den gefilterten Lenkwinkel ($\theta$ F) erzeugt, indem der Lenkwinkel ($\theta$) einem weiteren Filtervorgang mit einer Filterungsintensität unterzogen wird, die kleiner oder gleich oder 70 % des Filtervorgangs des zweiten Filtervorgangs ist, wenn erfasst wird, dass ein Lenkrad (17) mit einer Rate weiterbewegt wird, die schneller als ein vorbestimmter Wert ist.

**8.** Vorrichtung zum automatischen Einstellen einer Richtung einer Lichtachse eines Fahrzeug-Scheinwerferlichts nach Anspruch 2, wobei die erste Filterungseinheit (P1, P2) die Filterungsintensität des zweiten Filtervorgangs kontinuierlich schwächt, wenn der Lenkwinkel (θ) vom geraden Wendebereich in einen der Wendebereiche geändert wird.

9. Vorrichtung zum automatischen Einstellen einer Richtung einer Lichtachse eines Fahrzeug-Scheinwerferlichts nach Anspruch 2, wobei die erste Filterungseinheit (P1, P2) die Filterungsintensität des zweiten Filtervorgangs stufenweise schwächt, wenn der Lenkwinkel (θ) vom geraden Wendebereich in einen der Wendebereiche geändert wird.

10. Vorrichtung zum automatischen Einstellen einer Richtung einer Lichtachse eines Fahrzeug-Scheinwerferlichts nach Anspruch 2, wobei die Schwenksteuereinheit (CPU 20, 21) eine Schwenkwinkel-Berechnungseinheit aufweist, die einen primären Schwenkwinkel abhängig von dem gefilterten Lenkwinkel berechnet, der durch die erste Filterungseinheit (P1, P2) erzeugt wird, und eine zweite Filterungseinheit (P4, P5) einen Soll-Schwenkwinkel erzeugt, indem der primäre Schwenkwinkel gefiltert wird, wobei die zweite Filterungseinheit (P4, P5) ihre Filterungsintensität abhängig von einer Differenz zwischen dem primären Schwenkwinkel und einem Ist-Schwenkwinkel entsprechend der Richtung der Lichtachse des Fahrzeug-Scheinwerferlichts (10L, 10R) variiert, wobei die Schwenksteuereinheit (CPU 20, 21) ein Stellglied aufweist (11L, 11R), das die Richtung der Lichtachse des Fahrzeug-Scheinwerferlichts (10L, 10R) gemäß dem Soll-Schwenkwinkel einstellt.

11. Vorrichtung zum automatischen Einstellen einer Richtung einer Lichtachse eines Fahrzeug-Scheinwerferlichts nach Anspruch 10, wobei die zweite Filterungseinheit (P4, P5) den primären Schwenkwinkel einem schwachen Filtervorgang unterzieht, wenn eine Differenz zwischen dem primären Schwenkwinkel und dem Ist-Schwenkwinkel größer ist als ein vorbestimmter Wert, und einem intensiven Filtervorgang, wenn die Differenz kleiner oder gleich dem vorbestimmten Wert ist.

12. Vorrichtung zum automatischen Einstellen einer Richtung einer Lichtachse eines Fahrzeug-Scheinwerferlichts nach Anspruch 11, wobei eine Filterungsintensität der zweiten Filterungseinheit (P4, P5) zwischen einer Situation, in der das Lenkrad (17) zurück bewegt wird, und einer Situation, in der das Lenkrad (17) weiter weg bewegt wird, unterschiedlich ist.

13. Vorrichtung zum automatischen Einstellen einer Richtung einer Lichtachse eines Fahrzeug-Scheinwerferlichts nach Anspruch 12, wobei die Filterungsintensität der zweiten Filterungseinheit (P4, P5), wenn das Lenkrad (17) zurück bewegt wird, schwächer ist, als wenn das Lenkrad (17) weiter weg bewegt wird.


**Revendications**

1. Dispositif de commande pour ajuster automatiquement l'orientation d'un axe de lumière d'un phare de véhicule comprenant :

   un moyen de lecture de signaux (S101 sur la figure 4) lisant un signal d'angle de braquage dérivé par un capteur d'angle de braquage (18) indicatif d'un angle de braquage d'un volant d'un véhicule ; et
   une unité de commande de pivotement (CPU 21) exécutant une commande de pivotement pour ajuster une orientation d'un axe de lumière d'un phare de véhicule (10L, 10R) en fonction dudit signal d'angle de braquage ; **caractérisé en ce que** ladite unité de commande de pivotement (CPU 21) exécute un filtrage sur ledit signal d'angle de braquage, une intensité dudit filtrage étant changée en fonction d'une valeur dudit signal d'angle de braquage (P1, P2 sur la figure 3), et exécute ladite commande de pivotement en fonction dudit signal d'angle de braquage étant filtré.

2. Dispositif pour ajuster automatiquement l'orientation d'un axe de lumière d'un phare de véhicule selon la revendication 1, dans lequel ladite unité de commande de pivotement (CPU 21) possède une première unité de filtrage (P1, P2) générant un angle de braquage filtré (θF) en soumettant ledit angle de braquage détecté par ledit capteur d'angle de braquage (18) à un premier processus de filtrage quand ledit angle de braquage (θ) se situe à l'intérieur d'une plage de conduite en ligne droite autour d'une position angulaire neutre dudit volant (17) et à un deuxième processus de filtrage dont l'intensité de filtrage est plus faible qu'une intensité de filtrage dudit premier processus de filtrage quand ledit angle de braquage (θ) se situe dans l'une des plages de virage qui sont situées de part et d'autre de ladite plage de conduite en ligne droite.

3. Dispositif pour ajuster automatiquement l'orientation d'un axe de lumière d'un phare de véhicule selon la revendication 2, dans lequel ladite plage de conduite en ligne droite est une plage s'étendant depuis +10 degrés à travers ladite position angulaire neutre jusqu'à -10 degrés.

**4.** Dispositif pour ajuster automatiquement l'orientation d'un axe de lumière d'un phare de véhicule selon la revendication 3, dans lequel ladite intensité de filtrage dudit premier processus de filtrage est deux fois ou plus celle dudit deuxième processus de filtrage.

**5.** Dispositif pour ajuster automatiquement l'orientation d'un axe de lumière d'un phare de véhicule selon la revendication 3, dans lequel ladite intensité de filtrage dudit premier processus de filtrage est quatre fois ou plus celle dudit deuxième processus de filtrage.

**6.** Dispositif pour ajuster automatiquement l'orientation d'un axe de lumière d'un phare de véhicule selon la revendication 2, dans lequel ladite première unité de filtrage (P1, P2) génère ledit angle de braquage filtré (θ F) en soumettant ledit angle de braquage (θ) à un troisième processus de filtrage possédant une intensité de filtrage qui est égale à, ou 70 % ou moins celle dudit processus de filtrage dudit deuxième processus de.filtrage lors de la détection que le volant (17) est en cours de recul à une vitesse plus rapide qu'une valeur prédéterminée.

**7.** Dispositif pour ajuster automatiquement l'orientation d'un axe de lumière d'un phare de véhicule selon la revendication 2, dans lequel
ladite première unité de filtrage (P1, P2) génère ledit angle de braquage filtré (θ F) en soumettant ledit angle de braquage (θ) à un processus de filtrage supplémentaire possédant une intensité de filtrage qui est égale à ou 70 % ou moins dudit processus de filtrage dudit deuxième processus de filtrage lors de la détection que le volant (17) est en cours d'éloignement à une vitesse plus rapide qu'une valeur prédéterminée.

**8.** Dispositif pour ajuster automatiquement l'orientation d'un axe de lumière d'un phare de véhicule selon la revendication 2, dans lequel ladite première unité de filtrage (P1, P2) affaiblit de manière continue ladite intensité de filtrage dudit deuxième processus de filtrage quand ledit angle de braquage (θ) est changé dans l'une desdites plages de virage depuis ladite plage de conduite en ligne droite.

**9.** Dispositif pour ajuster automatiquement l'orientation d'un axe de lumière d'un phare de véhicule selon la revendication 2, dans lequel ladite première unité de filtrage (P1, P2) affaiblit par paliers ladite intensité de filtrage dudit deuxième processus de filtrage quand ledit angle de braquage (θ) est changé dans l'une desdites plages de virage depuis ladite plage de conduite en ligne droite.

**10.** Dispositif pour ajuster automatiquement l'orientation d'un axe de lumière d'un phare de véhicule selon la revendication 2, dans lequel ladite unité de commande de pivotement (CPU 20, 21) comporte une unité de calcul d'angle de pivotement qui calcule un angle de pivotement primaire dépendant dudit angle de braquage filtré généré par ladite première unité de filtrage (P1, P2), et une deuxième unité de filtrage (P4, P5) qui génère un angle de pivotement cible en filtrant ledit angle de pivotement primaire, ladite deuxième unité de filtrage (P4, P5) faisant varier une intensité de filtrage de celui-ci en fonction de la différence entre ledit angle de pivotement primaire et l'angle de pivotement effectif correspondant à ladite orientation dudit axe de lumière dudit phare de véhicule (10L, 10R), ladite unité de commande de pivotement (CPU 20, 21) possédant un actionneur (11L, 11R) ajustant ladite orientation dudit axe de lumière dudit phare de véhicule (10L, 10R) en fonction dudit angle de pivotement cible.

**11.** Dispositif pour ajuster automatiquement l'orientation d'un axe de lumière d'un phare de véhicule selon la revendication 10, dans lequel ladite deuxième unité de filtrage (P4, P5) soumet ledit angle de pivotement primaire à un filtrage faible quand la différence entre ledit angle de pivotement primaire et ledit angle de pivotement effectif est supérieur à une valeur prédéterminée, et à un filtrage intensif quand ladite différence est égale ou inférieure à ladite valeur prédéterminée.

**12.** Dispositif pour ajuster automatiquement l'orientation d'un axe de lumière d'un phare de véhicule selon la revendication 11, dans lequel une intensité de filtrage de ladite deuxième unité de filtrage (P4, P5) est différente entre le moment où ledit volant (17) est en cours de recul et le moment où ledit volant (17) est en cours d'éloignement.

**13.** Dispositif pour ajuster automatiquement l'orientation d'un axe de lumière d'un phare de véhicule selon la revendication 12, dans lequel ladite intensité de filtrage de ladite deuxième unité de filtrage (P4, P5) au moment où ledit volant (17) est en cours de recul est plus faible qu'au moment où ledit volant (17) est en cours d'éloignement.

# FIG. 1

## FIG. 2

# FIG. 3

STEERING ANGLE $\theta$ → **STEERING ANGLE FILTERING PROCESS** (P2) → STEERING ANGLE $\theta$ F → **PRIMARY SWIVEL ANGLE CALCULATING PROCESS** (P3) → PRIMARY SWIVEL ANGLE SWC → **TARGET SWIVEL ANGLE FILTERING PROCESS** (P5) → TARGET SWIVEL ANGLE SWT → **LIGHT AXIS ADJUSTING PROCESS** (P6)

**STEERING-ANGLE-FILTER SELECTING PROCESS** (P1)

**TARGET-SWIVEL-ANGLE-FILTER SELECTING PROCESS** (P4)

ACTUAL SWIVEL ANGLE SWP

EP 1 522 456 B1

# FIG. 4

```
            ( START )
                |
                v
  READING OF STEERING          S101
       ANGLE θ
                |
                v
CALCULATION OF VARIATION       S102
  RATE OF STEERING ANGLE
                |
                v                      S103
        /  STEERING  \
       <  WHEEL MOVED  >──── YES ──────────────────────┐
        \   BACK?    /                                  │
             |                                          │
            NO                                          │
             |                                          │
             v                       S104               │
        /  STEERING  \                                  │
       < WHEEL MOVED  >──── YES ──────────┐             │
        \ FARTHER AWAY/                    │             │
        \     ?     /                      │             │
             |                             │             │
            NO                             │             │
             |                             │             │
             v         S105                │             │
        / TURNING  \── YES ──┐             │             │
       <  RANGE?   /          │            │             │
        \         /           │            │             │
             |  S106          │ S107       │ S108        │ S109
            NO                │            │             │
             |                │            │             │
             v                v            v             v
      FILTERING         FILTERING     FILTERING      FILTERING
      PROCESS FOR       PROCESS       PROCESS FOR    PROCESS FOR
       STRAIGHT         FOR TURNING   STEERING       STEERING
    RUNNING RANGE         RANGE       WHEEL BEING    WHEEL BEING
                                      MOVED BACK     MOVED
                                                     FARTHER AWAY
             |                │            │             │
             v<───────────────┴────────────┴─────────────┘
                |
                v
  CALCULATION OF PRIMARY        S110
      SWIVEL ANGLE
                |
                v
   TARGET SWIVEL ANGLE          S111
   FILTERING PROCESS
                |
                v
   LIGHT AXIS ADJUSTING         S112
        PROCESS
                |
                v
            ( RETURN )
```

# FIG. 5

STEERING ANGLE $\theta$  STEERING ANGLE $\theta$ F

[° ]
RIGHT

+$\Delta\theta$
WHEN MOVING
FARTHER AWAY

−$\Delta\theta$
WHEN MOVING BACK

TURNING RANGE

+10

STRAIGHT RUNNING RANGE

0

TIME t

−10

TURNING RANGE

LEFT

# FIG. 6

```
          ( START )
              |
              v
   +---------------------+
   | CALCULATION OF      |  S201
   | CONTROL DELAY       |
   +---------------------+
              |
              v
         /    MOVE-   \   S202
        <  BACK-CONTROL >------ YES ---------------------------+
         \   DELAY?   /                                        |
              |                                                |
             NO                                                |
              |                                                |
              v                                                |
         /    MOVE-     \  S203                                |
        < FARTHER-AWAY-  >---- YES ------+                     |
         \CONTROL DELAY /                |                     |
         \      ?      /                 |                     |
              |                          v                     v
             NO    S204          +--------------+  S205  +--------------+ S206
              |                  | ACCELERATION |        | ACCELERATION |
              v                  | FILTERING    |        | FILTERING    |
   +------------------+          | PROCESS FOR  |        | PROCESS FOR  |
   | NORMAL FILTERING |          | MOVE-FARTHER-|        | MOVE-BACK-   |
   | PROCESS          |          | AWAY CONTROL |        | CONTROL DELAY|
   +------------------+          | DELAY        |        +--------------+
              |                  +--------------+              |
              |                          |                     |
              +<-------------------------+---------------------+
              |
              v
         ( RETURN )
```

16

# FIG. 7

PRIMARY SWIVEL
ANGLE SWC

ACTUAL SWIVEL
ANGLE SWP

MOVE-BACK-CONTROL DELAY

MOVE-FARTHER-
AWAY- CONTROL
DELAY

[° ]
RIGHT

0

LEFT

TIME t

# FIG. 8

PRIMARY SWIVEL
ANGLE SWC

ACTUAL SWIVEL
ANGLE SWP

[° ]
RIGHT

0

LEFT

TIME t

**EP 1 522 456 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2003055548 A
- US 2003067762 A1
- JP 2002178829 A